Europäisches Patentamt

European Patent Office

Office européen des brevets

(19)

(11) Numéro de publication : **0 295 174 B1**

## FASCICULE DE BREVET EUROPEEN

(12)

(45) Date de publication du fascicule du brevet :
**18.12.91 Bulletin 91/51**

(51) Int. Cl.⁵ : **B64C 25/34**

(21) Numéro de dépôt : **88401326.9**

(22) Date de dépôt : **01.06.88**

(54) Dispositif d'atterrissage à poutre basculante.

(30) Priorité : **09.06.87 FR 8707996**

(43) Date de publication de la demande :
**14.12.88 Bulletin 88/50**

(45) Mention de la délivrance du brevet :
**18.12.91 Bulletin 91/51**

(84) Etats contractants désignés :
**DE GB IT NL SE**

(56) Documents cités :
**US-A- 4 359 199**
**H.G. CONWAY: "Landing gear design", 1958,**
**page 231, Chapman & Hall Ltd, Londres, GB**

(73) Titulaire : **MESSIER BUGATTI**
**Zone aéronautique Louis Bréguet B.P. 40**
**F-78140 Velizy Villacoublay (FR)**

(72) Inventeur : **Derrien, Michel**
**14bis rue du Parc de Clagny**
**F-78000 Versailles (FR)**
Inventeur : **Veaux, Jacques**
**16 boulevard de la Liberté**
**F-92320 Chatillon (FR)**
Inventeur : **Hainaut, Jean-Pierre**
**13 avenue de Bretagne**
**F-94510 La Queue en Brie (FR)**

(74) Mandataire : **Fruchard, Guy et al**
**CABINET BOETTCHER 23, rue la Boétie**
**F-75008 Paris (FR)**

## Description

La présente invention concerne un dispositif d'atterrissage à boggie basculant.

On sait que pour les avions ayant un long fuselage, la condition de décollage avec un angle de cabré important impose une grande longueur du dispositif d'atterrissage principal, faute de quoi la queue de l'avion toucherait le sol. Par ailleurs, afin d'obtenir une assiette sensiblement horizontale de l'avion lorsqu'il roule sur le sol sans qu'il soit nécessaire d'allonger démesurément le dispositif d'atterrissage auxiliaire, on sait qu'il est souhaitable que le dispositif d'atterrissage principal soit du type à boggie basculant. Afin d'obtenir une résistance au pivotement de la poutre basculante articulée à l'extrémité inférieure de la tige d'amortisseur et formant le boggie basculant, le document US-A-4,359,199 décrit une bielle de réaction, ou un compas de réaction à limitation d'ouverture, ayant une extrémité fixée au caisson de l'amortisseur et une extrémité opposée fixée à la poutre basculante articulée à l'extrémité inférieure de la tige d'amortisseur, ce compas de réaction étant commun avec le compas anti torsion de la tige d'amortisseur ou séparé de celui-ci. Par ailleurs, on sait que la résistance au pivotement est d'autant plus grande que la biellette de réaction est fixée à la poutre basculante en un point le plus proche de l'extrémité de la poutre basculante opposée à la roue touchant le sol. Toutefois, lorsque l'on fixe la biellette ou le compas de réaction en un point proche de l'extrémité de la poutre basculante, on augmente la longueur de la course de la tige d'amortisseur et également celle de la course de rétraction dans le cas où il est nécessaire de rétracter l'amortisseur au relevage, ce qui présente des inconvénients, en particulier une augmentation du poids du dispositif d'atterrissage et une augmentation des frottements de coulissement de la tige d'amortisseur.

Un but de la présente invention est de proposer un dispositif d'atterrissage à boggie basculant qui permette d'obtenir une meilleure résistance au pivotement de la poutre basculante sans pour autant augmenter la course de la tige d'amortisseur ou la course de rétraction et permettant de réduire les frottements de coulissement.

En vue de la réalisation de ce but, on prévoit selon l'invention un dispositif d'atterrissage comportant un caisson pivotant dans lequel est montée une tige d'amortisseur en saillie vers le bas par rapport au caisson et mobile selon une direction axiale, une poutre basculante montée pour pivoter à une extrémité inférieure de la tige d'amortisseur et supportant un train de roues avant et un train de roues arrière, et un compas de réaction au pivotement de la poutre basculante comportant une branche supérieure et une branche inférieure reliées l'une à l'autre de façon articulée, la branche supérieure étant reliée de façon articulée au caisson et la branche inférieure étant reliée de façon articulée à la poutre basculante, caractérisé en ce qu'il comporte des moyens de blocage agissant sur la branche supérieure pour limiter un mouvement de pivotement vers le bas de cette branche supérieure lors d'une extension de la tige d'amortisseur et alors que celle-ci n'est pas complètement détendue.

Selon un premier mode de réalisation avantageux de l'invention, les moyens de blocage comprennent une butée associée à la branche supérieure du compas en regard d'un côté du caisson. Ainsi, lors du pivotement de la poutre basculante, la butée vient en appui sur un côté du caisson et la branche supérieure du compas est maintenue dans sa position limite inférieure pendant toute la phase de pivotement de la poutre basculante.

Selon un second mode de réalisation avantageux de l'invention, les moyens de blocage comprennent une bielle télescopique ayant une extrémité reliée à la branche supérieure du compas et une extrémité reliée au caisson. Ainsi, lors du pivotement de la poutre basculante, la bielle télescopique est amenée dans une position extrême où elle maintient la branche supérieure du compas dans une position limite inférieure.

Selon un autre aspect avantageux de l'invention, le dispositif d'atterrissage comporte des moyens de rappel pour ramener la branche supérieure du compas vers une position limite inférieure. Ainsi, la poutre basculante prend une orientation bien définie même lorsqu'aucune roue n'est en contact avec le sol.

Selon encore un autre aspect avantageux de l'invention, pour une position limite inférieure de la branche supérieure du compas, la branche inférieure du compas est dirigée vers un point de convergence de la direction axiale de la tige de l'amortisseur avec une direction de force appliquée lors d'un atterrissage au train de roues arrière au moment où il entre en contact avec le sol. Ainsi, la résultante de la force appliquée au train de roues arrière et de la force appliquée sur la branche inférieure du compas passe par l'axe de la tige de l'amortisseur, ce qui est favorable à une réduction des frottements de coulissement et donc au confort à l'atterrissage.

D'autres caractéristiques et avantages de l'invention apparaîtront à la lumière de la description qui suit de deux modes de réalisation préférés de l'invention en liaison avec les dessins ci-joints parmi lesquels :

    — la figure 1 est une vue de côté schématique d'un premier mode de réalisation du dispositif d'atterrissage selon l'invention,

    — la figure 2 est une vue de coté schématique d'un second mode de réalisation du dispositif d'atterrissage selon l'invention.

En référence aux dessins, le dispositif d'atterrissage selon l'invention comporte de façon classique un caisson 1 comportant à sa partie supérieure des moyens pour le relier de façon pivotante à la structure d'un avion. Bien entendu, le caisson 1 est également relié à la structure de l'avion par des moyens de commande, non représentés, permettant la descente ou le relevage du dispositif d'atterrissage. Une tige d'amortisseur 2 mobile selon une direction axiale 3 est associée à un amortisseur disposé dans le caisson 1, de préférence un amortisseur à rétraction, et s'étend en saillie vers le bas par rapport au caisson 1. Une poutre basculante 4 est montée pour pivoter autour d'un axe 5 à la partie inférieure de la tige d'amortisseur 2 et supporte des trains de roues 6 montés à chacune de ses extrémités. Un compas est disposé entre le caisson 1 et la poutre basculante 4, du côté avant du caisson 1 selon un sens de déplacement de l'avion, et comporte une branche supérieure 7 et une branche inférieure 8 reliées l'une à l'autre de façon articulée, la branche supérieure 7 étant reliée de façon articulée au caisson 1 et la branche inférieure 8 étant reliée de façon articulée à la poutre basculante 4.

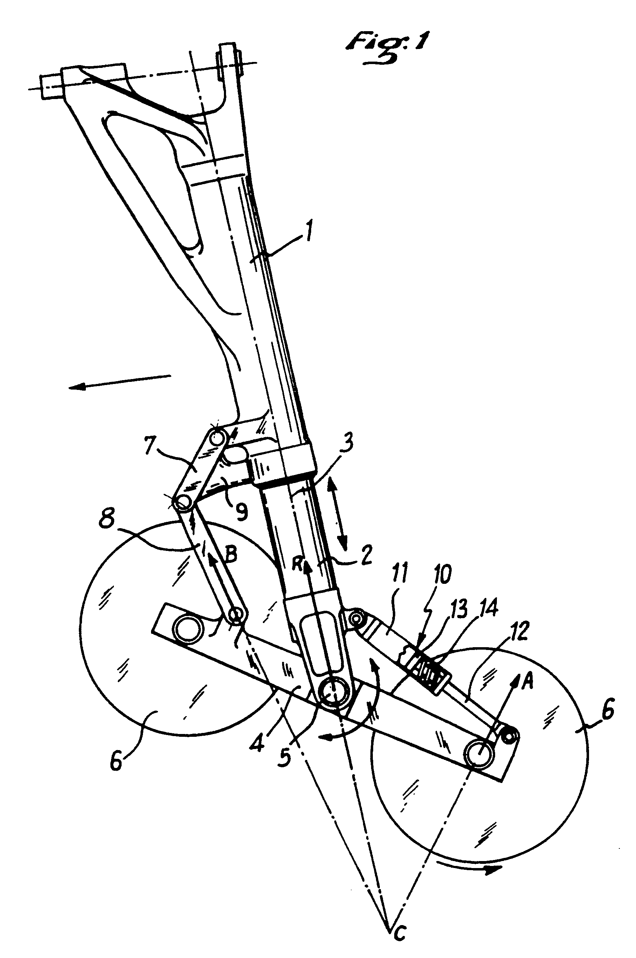

Selon l'invention, le dispositif d'atterrissage comporte des moyens de blocage pour limiter un mouvement de pivotement vers le bas de la branche supérieure 7 du compas. Selon le premier mode de réalisation illustré par la figure 1, les moyens de blocage comprennent une butée 9 associée à la branche supérieure 7 du compas et s'étendant en regard d'un côté du caisson 1.

De préférence, le dispositif comporte également une bielle télescopique généralement désignée en 10 comprenant un boîtier cylindrique 11 relié à la tige d'amortisseur 2 du côté arrière de celle-ci par rapport à un sens de déplacement de l'avion, et une tige 12 s'étendant à l'intérieur du boîtier cylindrique 11 et ayant une extrémité fixée de façon articulée au voisinage d'une extrémité arrière de la poutre basculante 4. L'extrémité de la tige de bielle 12 qui s'étend dans le boîtier 11 comporte une tête 13 sur laquelle prend appui un ressort de compression 14 disposé pour exercer une action de traction sur la tige 12.

Le fonctionnement du dispositif selon l'invention est le suivant : lorsque le dispositif d'atterrissage est en position complètement détendue comme illustré par la figure 1, c'est-à-dire juste après le décollage ou juste avant l'atterrissage, la poutre basculante 4 est sollicitée dans le sens inverse des aiguilles d'une montre par les moyens de rappel que forme la bielle télescopique à ressort 10. Sous l'effet de cette sollicitation, la butée 9 vient en appui sur le côté avant du caisson 1 et la branche supérieure 7 du compas se trouve donc bloquée en position limite inférieure. La poutre 4 est inclinée et le train de roues arrière est à un niveau inférieur au train de roues avant. Lors d'un atterrissage, lorsque le train de roues arrière touche le sol une force A se trouve appliquée par réaction du sol à l'axe de rotation du train arrière. Sous l'effet de cette force A, la poutre basculante pivote autour de l'axe 5 en maintenant la butée 9 fermement appliquée contre le côté du caisson 1 de sorte que seule la branche inférieure 8 du compas peut pivoter. La conséquence est que la force qui équilibre le moment de la force A par rapport à l'axe de pivotement 5 de la poutre basculante est une force B dirigée suivant l'axe longitudinal de la branche inférieure 8 du compas. La géométrie du compas, c'est-à-dire la longueur des branches supérieure et inférieure 7 et 8 et le point de fixation de la branche inférieure 8 à la poutre basculante 4, est réalisée pour que la branche inférieure 8 du compas soit dirigée vers le point de convergence C de la force A avec l'axe 3 de la tige d'amortisseur. Ainsi, la résultante R des forces A et B se trouve dirigée suivant la direction axiale 3 de la tige d'amortisseur 2 qui ne se trouve alors soumise aucun effort tranchant et coulisse donc en souplesse dans le caisson 1.

Lorsque le train de roues avant touche également le sol, le fonctionnement en mode à levier du dispositif d'atterrissage s'interrompt et le dispositif passe au fonctionnement en mode direct par enfoncement de la tige d'amortisseur 2. Dans ce mode de fonctionnement, le compas se referme et la butée 9 cesse d'être en appui sur le côté du caisson 1.

Lors d'un décollage le compas est tout d'abord en position fermée et il s'ouvre progressivement au fur et à mesure de la détente de la tige d'amortisseur 2. La butée 9 vient en appui sur le côté du caisson, avant que la tige d'amortisseur 2 ne soit complètement détendue, et la détente subséquente de la tige d'amortisseur 2 provoque le basculement de la poutre basculante 4, le dispositif étant alors en mode à levier.

On remarquera que la bielle à ressort 10 peut être remplacée par un amortisseur hydraulique et/ou pneumatique. Dans ce cas, la bielle 10 agit également comme amortisseur de tangage.

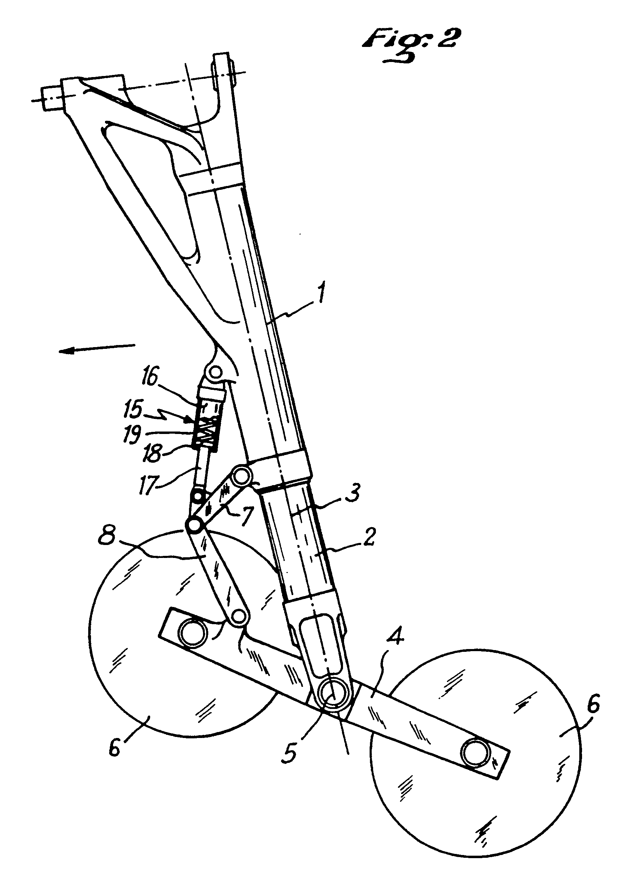

Dans le second mode de réalisation illustré par la figure 2, la butée 9 et la biellette à ressort 10 ont été remplacées par une bielle à ressort généralement désignée en 15 et comportant un boîtier cylindrique 16 monté articulé sur le caisson 1 du côté avant de celui-ci en un point situé au-dessus du point d'articulation de la branche supérieure 7 du compas sur le caisson 1, et une tige 17 ayant une extrémité inférieure fixée de façon articulée à la branche supérieure 7 du compas. L'extrémité supérieure de la tige de bielle 17 se termine par une tête 18 sur laquelle prend appui un ressort de compression 19 qui tend à repousser la tête 18 vers le bas jusqu'au moment où celle-ci arrive en butée sur l'extrémité inférieure du boîtier cylindrique 16.

De même que pour la figure 1, le dispositif de la figure 2 est représenté en position totalement détendue. Dans cette position le ressort 19 repousse la tige 17 en position complètement sortie et la branche supérieure 7 du compas se trouve donc en position limite inférieure. Lorsque le train de roues arrière touche le sol, les forces agissant sur le dispositif tendent à maintenir la tige 17 en position complètement sortie et la branche supérieure 7 du compas se trouve maintenue bloquée en position limite inférieure tandis que la poutre basculante pivote dans le sens inverse des aiguilles d'une montre jusqu'au moment où le train de roues avant touche le sol et provoque la rétraction de la tige d'amortisseur 2 selon le mode de fonctionnement direct.

Une fois encore, la bielle à ressort 15 qui est représentée sur la figure peut être remplacée par un amortisseur qui, dans le mode de fonctionnement direct, fonctionnera comme amortisseur de tangage.

Bien entendu l'invention n'est pas limitée au mode de réalisation décrit et on peut y apporter des variantes de réalisation sans sortir du cadre de l'invention. En particulier, dans le cas de la figure 1, on peut remplacer la butée rigide 9 par une biellette télescopique du type de la biellette 10, le boîtier étant monté de façon articulée sur le côté du caisson 1 en dessous du point d'articulation de la branche supérieure 7 au caisson 1, tandis que la tige est reliée à la branche supérieure 7. Avec une telle structure, la bielle télescopique restera rétractée pendant la phase de pivotement de la poutre basculante et commencera à se détendre lors de la rétraction de la tige d'amortisseur 2.

Sans sortir du cadre de l'invention, on peut transmettre les efforts engendrés au niveau du compas, par exemple un couple de torsion appliqué à l'atterrisseur lors d'un pivotement sur place, selon différents cheminements en agissant sur la nature des articulations des branches du compas entre elles ou par rapport aux éléments auxquels elles sont associées. Par exemple si l'on prévoit au niveau de l'articulation intermédiaire une liaison à rotule ou une liaison équivalente, c'est-à-dire permettant un jeu des deux branches du compas selon une direction perpendiculaire au plan les contenant, et une articulation très encastrée au niveau de l'articulation inférieure du compas, une torsion résultant d'un pivotement sur place sera transmise avec un couple résultant de la distance entre l'axe d'articulation médian et l'axe longitudinal de la poutre. La poutre subira alors une forte torsion autour de son axe longitudinal tandis que la branche supérieure du compas sera faiblement sollicitée. Si au contraire l'articulation médiane est fortement encastrée c'est-à-dire ne permet des mouvements de pivotement des deux branches de compas l'un par rapport à l'autre que dans le plan qui les contient (plan de la figure dans les exemples illustrés), et si l'articulation inférieure est une liaison à rotule ou une liaison équivalente, la torsion résultant d'un pivotement sur place sera essentiellement transmise à la branche supérieure du compas et ne sera transmise à la poutre basculante que dans la proportion de la distance entre l'axe d'artiction inférieur du compas et l'axe longitudinal de la poutre basculante.

## Revendications

1. Dispositif d'atterrissage comportant un caisson pivotant (1) dans lequel est montée une tige d'amortisseur (2) en saillie vers le bas par rapport au caisson et mobile selon une direction axiale (3), une poutre basculante (4) montée pour pivoter à une extremité inférieure de la tige d'amortisseur (2) et supportant un train de roues avant et un train de roues arrière (6), et un compas de réaction au pivotement de la poutre basculante comportant une branche supérieure (7) et une branche inférieure (8) reliées l'une à l'autre de façon articulée, la branche supérieure (7) étant reliée de façon articulée au caisson (1) et la branche inférieure (8) étant reliée de façon articulée à la poutre basculante, caractérisé en ce qu'il comporte des moyens de blocage (9, 15) agissant sur la branche supérieure (7) pour limiter un mouvement de pivotement vers le bas de cette branche supérieure (7) lors d'une extension de la tige d'amortisseur (2) et alors que celle-ci n'est pas complètement détendue.

2. Dispositif selon la revendication 1 caractérisé en ce que les moyens de blocage comprennent une butée (9) associée à la branche supérieure (7) du compas de réaction en regard d'un côté du caisson.

3. Dispositif selon la revendication 1 caractérisé en ce que les moyens de blocage comprennent une bielle télescopique (15) ayant une extrémité reliée à la branche supérieure (7) du compas de réaction et une extrémité reliée au caisson (1).

4. Dispositif selon l'une des revendications 1 à 3 caractérisé en ce qu'il comporte des moyens de rappel (14, 19) pour ramener la branche supérieure (7) du compas de réaction vers une position limite inférieure.

5. Dispositif selon l'une des revendications 1 à 4 caractérisé en ce que pour une position limite inférieure de la branche supérieure (7) du compas de réaction, la branche inférieure (8) du compas de réaction est dirigée vers un point de convergence (C) de la direction axiale (3) de la tige de l'amortisseur avec une direction de force (A) appliquée lors d'un atterrissage au train de roues arrière au moment où il entre en contact avec le sol.

## Patentansprüche

1. Landevorrichtung, umfassend ein schwenkbares Gehäuse (1), in dem eine Federbeinstange (2) so montiert ist, daß sie nach unten aus dem Gehäuse herausragt und in axialer Richtung bewegbar ist, einen Schwenkträger (4), der an einem unteren Ende der Federbeinstange (2) schwenkbar gelagert ist und der einen vorderen Radsatz und einen hinteren Radsatz (6) trägt und eine auf die Schwenkbewegung des Schwenkträgers (4) reagierende Reaktionskniehebelanordnung mit einem oberen Schenkel (7) und einem unteren Schenkel (8), die gelenkig miteinander verbunden sind, wobei der obere Schenkel (7) an dem Gehäuse (1) und der untere Schenkel (8) an dem Schwenkträger (4) angelenkt ist, dadurch **gekennzeichnet**, daß die Vorrichtung Blockiermittel (9, 15) aufweist, die auf den oberen Schenkel (7) wirken, um eine nach unten gerichtete Schwenkbewegung des oberen Schenkels (7) bei einem Ausfahren der Federbeinstange (2) zu begrenzen solange diese nicht vollständig entspannt ist.

2. Vorrichtung nach Anspruch 1, dadurch **gekennzeichnet**, daß die Blockiermittel einen Anschlag (9) aufweisen, der mit dem oberen Schenkel (7) der Reaktionskniehebelanordnung gegenüber einer Seite des Gehäuses verbunden ist.

3. Vorrichtung nach Anspruch 1, dadurch **gekennzeichnet**, daß die Blockiermittel eine Teleskopstange (15) aufweisen, deren eines Ende mit dem oberen Schenkel (7) der Reaktionskniehebelanordnung und deren anderes Ende mit dem Gehäuse (1) verbunden ist.

4. Vorrichtung nach einem der Ansprüche 1 bis 3, dadurch **gekennzeichnet**, daß Rückstellmittel (14, 19) vorgesehen sind, um den oberen Schenkel (7) der Reaktionskniehebelanordnung in Richtung auf eine untere Endstellung zurückzuführen.

5. Vorrichtung nach einem der Ansprüche 1 bis 4, dadurch **gekennzeichnet**, daß für eine untere Endstellung des oberen Schenkels (7) der Reaktionskniehebelanordnung der untere Schenkel (8) der Reaktionskniehebelanordnung auf einen Konvergenzpunkt (C) der Achsrichtung (3) der Federbeinstange mit der Richtung (A) einer Kraft gerichtet ist, die bei einer Landung auf den hinteren Radsatz einwirkt im Moment, wenn dieser Berührung mit dem Boden bekommt.

## Claims

1. Landing gear comprising a pivoting strut (1) receiving the rod of a shock absorber (2) which projects downwardly from the strut and is movable in an axial direction (3) relative thereto, a rocking beam (4) mounted to tilt at the bottom end of the shock absorber rod (2) and supporting leading and trailing wheel sets (6) and reaction compasses to a tilting of the rocking beam comprising a top branch (7) and a bottom branch (8) which are hinged to each other, the top branch (7) being hinged to the strut (1) and the bottom branch (8) being hinged to the rocking beam, the landing gear being characterized in that it includes locking means (9, 15) acting on the top branch (7) for limiting a downwards pivot movement of the top branch (7) upon extension of the shock absorber rod and while the shock absorber rod (2) is not fully extended.

2. Landing gear according to claim 1, characterized in that the locking means comprise an abutment (9) associated with the top branch (7) of the compasses and facing one side of the strut.

3. Landing gear according to claim 1, characterized in that the locking means comprise a telescopic link (15) having one end connected to the top branch (7) of the compasses and having its opposite end connected to the strut (1).

4. Landing gear according to any one of claims 1 to 3, characterized in that it includes return means (14, 19) for returning the top branch (7) of the compasses towards a bottom limit position.

5. Landing gear according to any one of claims 1 to 4, characterized in that for a bottom limit position of the top branch (7) of the compasses, the bottom branch (8) of the compasses is directed towards the point (C) of intersection between the axial direction (3) of the shock absorber rod and the line of application of the force (A) applied to the trailing wheel set of the landing gear at the moment when it contacts the ground during landing.

*Fig. 1*

*Fig. 2*